# EUROPEAN PATENT APPLICATION

(11) **EP 4 770 151 A1**
(43) Date of publication of application: **01.07.2026**
(21) Application number: 24865659.7
(22) Date of filing: 19.07.2024
(51) Int. Cl.: H04W 8/02, H04W 60/04, H04W 68/02, G06N 3/09, G06N 20/00, H04W 88/14

(54) **ELECTRONIC DEVICE AND METHOD FOR PROVIDING DYNAMIC TRACKING AREA LIST IN WIRELESS COMMUNICATION SYSTEM**

(30) Priority: 15.09.2023 KR 20230123515; 27.09.2023 KR 20230131011
(71) Applicant: Samsung Electronics Co., Ltd., Suwon-si, Gyeonggi-do 16677 (KR)
(72) Inventor: KIM, Bokkeun, Suwon-si, Gyeonggi-do 16677 (KR); KIM, Gyeongsik, Suwon-si, Gyeonggi-do 16677 (KR); KIM, Jin, Suwon-si, Gyeonggi-do 16677 (KR); LEE, Heonhyung, Suwon-si, Gyeonggi-do 16677 (KR); JEONG, Hyeongyo, Suwon-si, Gyeonggi-do 16677 (KR)
(74) Representative: Nederlandsch Octrooibureau
(86) International application number: PCT/KR2024/010488
(87) International publication number: WO 2025/058216

(57) **Abstract**

According to one embodiment, a method performed by a mobility management device comprises an operation for acquiring mobility information and paging history information about a user equipment (UE). The method comprises an operation for determining the number of cells in a dynamic tracking area list on the basis of the mobility information and the paging history information. The method comprises an operation for identifying at least one cell among candidate cells corresponding to the mobility information on the basis of the number of cells in the dynamic tracking area list. The method comprises an operation for generating the dynamic tracking area list on the basis of the at least one identified cell. The method comprises an operation for performing a paging procedure in each of the cells in the dynamic tracking area list on the basis of identifying downlink data for the UE.

## Description

### [Technical Field]

The present disclosure relates to a wireless communication system, and more specifically, to an electronic device and a method for providing a dynamic tracking area list in the wireless communication system.

### [Background Art]

A service area by a mobile communication network is divided into a plurality of tracking areas. For mobility management of a user equipment (UE), paging messages broadcast in a plurality of tracking areas and a tracking area update procedure of an electronic device that moves from a tracking area to another tracking area may be used.

The above-described information may be provided as a related art for the purpose of helping understanding of the present disclosure. No argument or decision is made as to whether any of the above description may be applied as a prior art related to the present disclosure.

### [Disclosure]

### [Technical Solution]

According to an embodiment, a method performed by a mobility management device may comprise obtaining mobility information of a user equipment (UE) and paging history information of the UE. The method may comprise, based on the mobility information and the paging history information, determining the number of cells of a dynamic tracking area list. The method may comprise, based on the number of cells of the dynamic tracking area list, identifying at least one cell among candidate cells according to the mobility information. The method may comprise, based on the identified at least one cell, generating the dynamic tracking area list. The method may comprise, based on identifying downlink data for the UE, performing a paging procedure in each of cells in the dynamic tracking area list.

According to an embodiment, a mobility management device may comprise at least one transceiver and a processor coupled to the at least one transceiver. The processor may be configured to obtain mobility information of a user equipment (UE) and paging history information of the UE. The processor may be configured to, based on the mobility information and the paging history information, determine the number of cells of a dynamic tracking area list. The processor may be configured to, based on the number of cells of the dynamic tracking area list, identify at least one cell among candidate cells according to the mobility information. The processor may be configured to, based on the identified at least one cell, generate the dynamic tracking area list. The processor may be configured to, based on identifying downlink data for the UE, perform a paging procedure in each of cells in the dynamic tracking area list.

According to an embodiment, a non-transitory computer readable medium may include memory configured to store instructions. The instructions, when executed by a processor, may cause a mobility management device to obtain mobility information of a user equipment (UE) and paging history information of the UE, based on the mobility information and the paging history information, determine the number of cells of a dynamic tracking area list, based on the number of cells of the dynamic tracking area list, identify at least one cell among candidate cells according to the mobility information, based on the identified at least one cell, generate the dynamic tracking area list, and based on identifying downlink data for the UE, perform a paging procedure in each of cells in the dynamic tracking area list.

### [Description of the Drawings]

FIG. 1A illustrates an example of tracking area lists (TALs).
FIG. 1B illustrates an example of paging.
FIG. 2 illustrates an example of a paging message.
FIG. 3 illustrates an example of a dynamic tracking area list (DTAL).
FIG. 4A illustrates an example of learning of user equipment (UE) mobility.
FIG. 4B illustrates an example of a machine learning model.
FIG. 5A illustrates an example of learning of user equipment (UE) mobility.
FIG. 5B illustrates an example of a machine learning model.
FIG. 6A illustrates an example of learning of the number of occurrences of a paging procedure for a user equipment (UE).
FIG. 6B illustrates an example of a machine learning model.
FIG. 7 illustrates an example of a change of a dynamic tracking area according to a movement of a UE.
FIG. 8A and FIG. 8B illustrate examples of a dynamic tracking area and a registration procedure.
FIG. 9 illustrates an example of a dynamic tracking area and paging.
FIG. 10 illustrates examples of performance of a dynamic tracking area.
FIG. 11 illustrates an operation flow of a mobility management device for providing a dynamic tracking area.
FIG. 12 illustrates an example of devices for providing cells of a dynamic tracking area list.
FIG. 13 illustrates a functional configuration of a mobility management device for providing a dynamic tracking area according to embodiments.

### [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

A term referring to a signal (e.g., signal, information, message, signaling), a term referring to a data type (e.g., list, set, subset), a term for a calculation state (e.g., step, operation, procedure), a term referring to data (e.g., packet, user stream, information, bit, symbol, codeword), a term referring to a resource (e.g., symbol, slot, subframe, radio frame, subcarrier, resource element (RE), resource block (RB), bandwidth part (BWP), opportunity), a term referring to a channel, a term referring to a network entity, a term referring to a device, and the like, that are used in the following description, are exemplified for convenience of explanation. Therefore, the present disclosure is not limited to terms to be described below, and another term having an equivalent technical meaning may be used.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B).

The present disclosure describes various embodiments by using terms used in some communication standards (e.g., 3rd Generation Partnership Project (3GPP), European Telecommunications Standards Institute (ETSI), an extensible radio access network (xRAN), and an open-radio access network (O-RAN)), but this is only an example for explanation. Various embodiments of the present disclosure may be easily modified and applied in another communication system.

A tracking area is an area used in a mobile communication network to manage a location of a terminal (e.g., user equipment (UE)). For example, in a 4G or 5G network of the 3GPP, a tracking area list (TAL) is used to manage the location of the UE. Even when the UE is in an idle mode, if the TAL is changed, the UE may notify a core network of changed location information through a tracking area update or registration procedure. Accordingly, it is guaranteed that the UE is within the TAL even in the idle mode. Hereinafter, in the present disclosure, the TAL may have the same meaning as a tracking area identity (TAI) list (TAI list).

An electronic device for mobility management in the core network may include a mobility management entity (MME) or an access and mobility management function (AMF). The electronic device may use the TAL in a paging procedure for finding the UE in the idle mode.

As a wireless communication system continuously develops, the number of base stations increases, and the number of required tracking areas further increases. Such demand causes a burden on mobility management of a UE of a mobile communication network. Machine learning in a field of artificial intelligence (AI) and various algorithms may be used to predict an expected location of the UE and a time during which the UE will stay. The machine learning and the various algorithms may be used to predict the number of gNBs (or cells in which the UE is located) through which the UE passes during a designated time interval. The machine learning and the various algorithms may be used to predict the number of pagings occurring during the designated time interval. The machine learning and the various algorithms may be used to predict a size of a location in which the UE will stay.

In order to solve the above-described problem, embodiments of the present disclosure describe a technology for providing a differentiated dynamic tracking area list (DTAL) (or, a dynamic registration area) for each UE based on the prediction result. A tracking area in the dynamic tracking area list may be referred to as a dynamic tracking area. The dynamic tracking area list may be configured to have a smaller size than another TAL. Through the dynamic tracking area list, signaling in paging may be reduced. In addition, even when the UE is located outside the another TAL, in a case that the UE is within a range of the dynamic tracking area list, the registration procedure may not be performed. Accordingly, an occurrence frequency of the registration procedure may be greatly reduced. Additionally, for a UE having a high paging frequency, a smaller dynamic tracking area list may be set. In a case that the smaller dynamic tracking area list is set for the UE having the high paging frequency, signaling in paging may be reduced. Embodiments of the present disclosure not only provide a simply predicted tracking area list, but also may reduce an overhead according to transmission of indiscriminate paging messages by setting a size of cells in a TAL for paging.

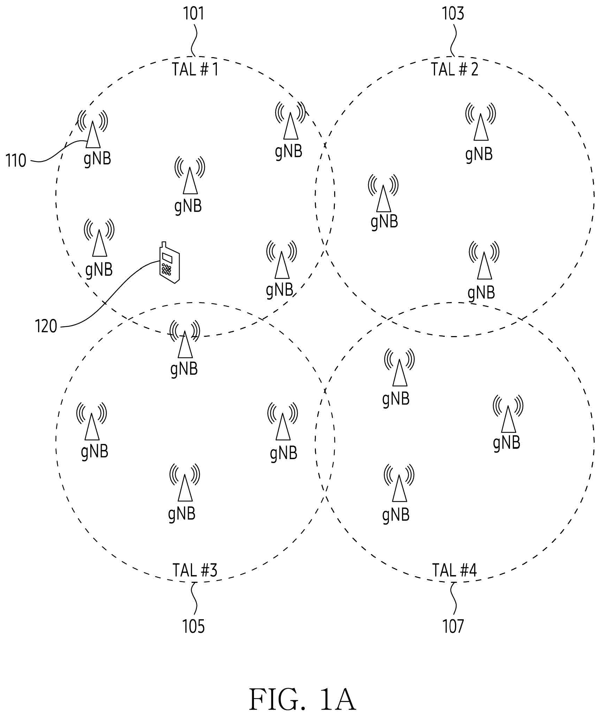

FIG. 1A illustrates an example of tracking area lists (TALs) according to an embodiment. In FIG. 1A, as a portion of nodes using a radio channel in a wireless communication system, a base station and a terminal are illustrated.

Referring to FIG. 1A, a base station 110 is a network infrastructure that provides a terminal 120 with wireless access. The base station 110 has a coverage defined based on a distance at which a signal may be transmitted. In addition to a base station, the base station 110 may be referred to as an access point (AP), an eNodeB (eNB), a 5th generation (5G) node, a next generation nodeB (gNB), a wireless point, a transmission/reception point (TRP), or another term having an equivalent technical meaning. Hereinafter, in describing UE mobility of the present disclosure, a base station will be described as being referred to as a gNB, but it goes without saying that other terms may be used according to a communication environment or an embodiment.

The terminal 120 is a device used by a user, and performs communication with the base station 110 through a radio channel. A link from the base station 110 to the terminal 120 is referred to as a downlink (DL), and a link from the terminal 120 to the base station 110 is referred to as an uplink (UL). Also, although not illustrated in FIG. 1A, the terminal 120 and another terminal may perform communication with each other through a radio channel. At this time, a link (a device-todevice link (D2D)) between the terminal 120 and the another terminal is referred to as a sidelink, and the sidelink may be interchangeably used with a PC5 interface. In some other embodiments, the terminal 120 may be operated without involvement of the user. According to an embodiment, the terminal 120, which is a device performing machine type communication (MTC), may not be carried by the user. Also, according to an embodiment, the terminal 120 may be a narrowband (NB)-internet of things (IoT) device. In addition to a terminal, the terminal 120 may be referred to as a user equipment (UE), a customer premises equipment (CPE), a mobile station, a subscriber station, a remote terminal, a wireless terminal, an electronic device, a user device, or another term having an equivalent technical meaning. Hereinafter, in describing mobility of a terminal of the present disclosure, the terminal will be described as being referred to as a UE, but other terms may be used according to a communication environment or an embodiment.

A network requires tracking areas. A tracking area is a basic unit for tracking a UE at a core network level. The tracking area may be identified by a tracking area identity (TAI) broadcast within cells of the tracking area. The TAI may be configured with a tracking area code (TAC) and a public land mobile network ID (identifier). A UE in an idle mode may obtain the TAI through a system information block type 1 (SIB1). The tracking area of the TAI may be used for registration with a mobility management device (e.g., AMF, or MME). The UE may report a current tracking area to the mobility management device through non-access stratum (NAS) signaling. The UE may provide the mobility management device with the current tracking area through a registration request message.

Registration area management may include a function of allocating and reallocating a registration area to a UE. The mobility management device (e.g., MME, or AMF) may assign a tracking area list, that is, a TAL, to the UE through the NAS signaling. The mobility management device may provide the UE with the TAL through a registration accept message. When the UE registers with a network through 3GPP access, the mobility management device may allocate a set of tracking areas of a TAI list to the UE. That is, the mobility management device may allocate the registration area to the UE during a registration procedure. The registration area is defined as a set of tracking areas, and each tracking area may consist of one or more cells covering a geographic area. Within a 5G system (5GS), a concept of "registration for multiple tracking areas" may be applied. In order to reduce tracking area update signaling within the 5GS, the AMF may allocate a plurality of tracking areas to the UE. This tracking area constructs a list of tracking areas identified as the TAI list.

The mobility management device may take into account various information (e.g., a mobility pattern and an allowed/non-allowed area) when allocating, to the UE, the registration area, that is, the set of tracking areas of the TAI list. The 5G system may support the allocation of the registration area by using a single TAI list including tracking areas of all NG-RAN nodes in the registration area for the UE. The UE may determine that it is registered in the list of tracking areas, that is, the TAL.As long as the UE remains in one of the tracking areas of the tracking area list received from the mobility management device, the UE does not need to trigger a registration procedure for mobility and a periodic registration update (e.g., a 5GS registration type information element (IE) set to "mobility registration update" in the registration request message) used for the mobility. Until receiving a new TAI list through a new registration procedure, a periodic registration update procedure, or a general UE configuration update procedure, or until receiving a command according to a rejection or a deregistration, the UE may determine that a currently allocated TAI list is valid.

In order for a location of the UE to be identified in the idle mode, the UE may perform a registration procedure whenever it leaves the TAL, that is, whenever it leaves the registration area. The registration procedure may be configured with one TAL. In general, the TAL may be set as a fixed geographic area as illustrated in FIG. 1A. The mobility management device may select one TAL for the UE from among designated TALs and use it as the registration area. However, since the designated TALs are commonly operated based on UEs, the registration area, which is one of the designated TALs, does not sufficiently reflect a mobility pattern of the UE. In addition, since the TAL is also used in a paging procedure, in order to reduce unnecessary paging signaling, configuring TAL using the mobility pattern of the UE may be required.

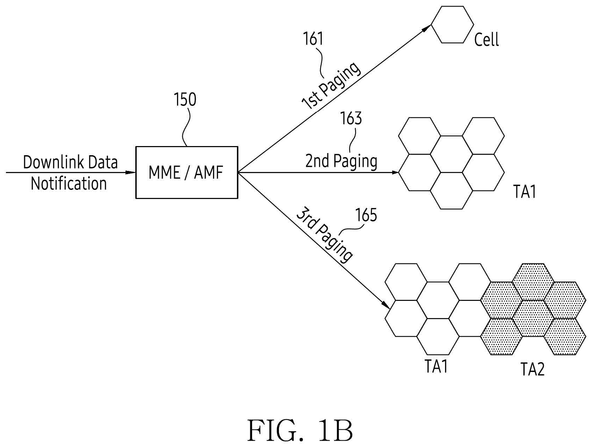

FIG. 1B illustrates an example of paging according to an embodiment. The paging refers to a procedure in which a message is transmitted from a network in order to convert a user equipment (UE) in a radio resource control (RRC) idle mode (or a UE in an RRC inactive mode) to an RRC connected mode. The paging may be performed by a mobility management device (e.g., MME or AMF) of a core network. In FIG. 1B, multi-stage paging is described. The multi-stage paging refers to a paging procedure that is repeatedly performed while stepwise increasing a broadcast range of a paging message.

Referring to FIG. 1B, a mobility management device 150 may receive a notification of downlink data. The mobility management device 150 may initiate a procedure for changing a network connection mode of a UE to the RRC connected mode for a communication service of the UE. The mobility management device 150 may control a base station to broadcast a paging message in a cell to which the UE is expected to be located.

In operation 161, the mobility management device 150 may, as a first stage (i.e., primary paging) of a multi-stage paging procedure, broadcast a paging message on a cell through the base station. The paging message may be broadcast to one or more UEs of the cell. In operation 163, the mobility management device 150 may, as a second stage (i.e., secondary paging) of the multi-stage paging procedure, broadcast the paging message on a tracking area through base stations. The paging message may be broadcast to one or more UEs on the tracking area. The tracking area may consist of a plurality of cells. In operation 165, the mobility management device 150 may, as a third stage (i.e., tertiary paging) of the multi-stage paging procedure, broadcast the paging message on a plurality of tracking areas of a tracking area list through the base stations. The paging message may be broadcast to UEs in the plurality of tracking areas. Since it is guaranteed that the UE is within a TAL in the RRC idle mode, the UE that has received the paging message may operate in the RRC connected mode and may resume a service.

In FIG. 1B, a three-stage paging procedure has been described. Hereinafter, in the present disclosure, in order to describe the multi-stage paging, the three-stage paging has been described as an example, however, a paging technique of the present disclosure is not limited thereto. A single paging, a two-stage paging, or an n-stage (where the n is an integer greater than or equal to 4) paging technique may be used. In addition, in the last stage of the paging procedure, the paging message may be broadcast on all tracking areas of the TAL.

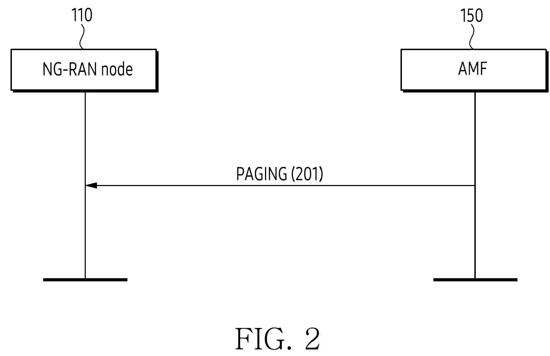

FIG. 2 illustrates an example of a paging message according to an embodiment.

Referring to FIG. 2, a mobility management device 150 (e.g., MME or AMF) may transmit a paging message 201 to a base station 110 (e.g., a RAN node) through an N2 interface. The RAN node may be used as a term including a base station, such as an NG-RAN node, a gNB, or an eNB. The mobility management device 150 may initiate a paging procedure by transmitting the paging message 201 to the base station 110. The mobility management device 150 may transmit the paging message 201 to each base station belonging to a tracking area of a tracking area list (an N2 interface). The base station 110 may provide one or more cells. When the paging message 201 is received at the base station 110, the base station 110 may obtain a TAI list for a paging IE. The base station 110 should perform paging of a UE in a cell belonging to a tracking area indicated by the TAI list. The base station 110 may broadcast the paging message to the UE (Uu interface).

A paging procedure and a registration procedure generate many traffics in a 5G network. For example, an amount of traffic varies according to a configuration of a TAL. In embodiments of the present disclosure, a TAL configured as a registration area for the registration procedure may be used as a TAL configured for the paging procedure. The TAL may be determined based on a prediction result of a moving path of a UE and may be referred to as a dynamic TAL (DTAL). A size of the DTAL may be determined based on a prediction result of the number of cells (or gNBs) to pass through. The size of the DTAL may be determined based on a prediction result of the number of occurrences of the paging procedure.

As the number of cells belonging to the DTAL increases, the number of registration procedures decreases, whereas, since a paging message is required for each cell, the number of signaling of an entire paging procedure increases. In addition, UEs located at a boundary region of the DTAL or moving beyond the DTAL at a high speed may perform more registration procedures than UEs that do not. In particular, in 5G, since a size of a cell becomes smaller, the number of signaling of the entire paging procedure increases. For example, as high-speed UEs such as an autonomous vehicle and a drone are added, a registration procedure and traffics due to the registration procedure increase more greatly.

In order to solve this, an electronic device (e.g., MME or AMF) for mobility management according to embodiments of the present disclosure may provide, to a UE, the dynamic tracking area list (DTAL) (or a dynamic registration area) having a size configured differently for each UE.

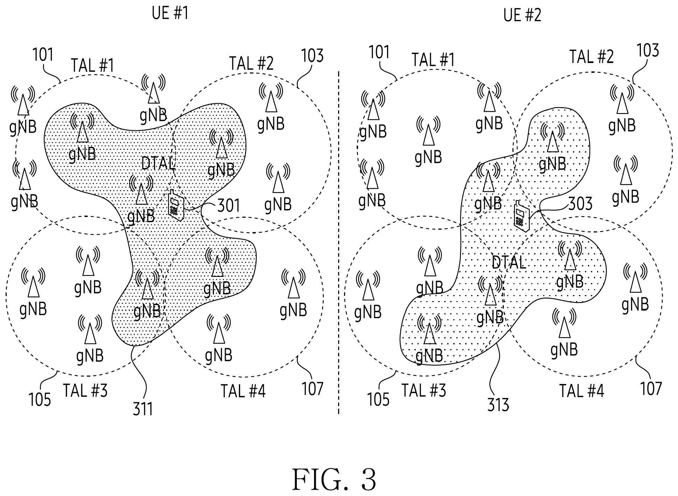

FIG. 3 illustrates an example of a dynamic tracking area list (DTAL) according to an embodiment. A mobility management device (e.g., MME or AMF) according to embodiments may predict cells (or gNBs) in which a UE will subsequently stay and a size of the cells (or a gNB list) based on a learning result for a previous moving path of the UE. The mobility management device may determine a TAL (hereinafter, a dynamic TAL (DTAL)) for the UE based on cells (or gNBs) predicted in a machine learning model. According to an embodiment, the mobility management device may configure a DTAL for each UE.

Referring to FIG. 3, a network may provide a TAL #1 101, a TAL #2 103, a TAL #3 105, and a TAL #4 107. Since TALs are operated fixedly, as a moving path of a UE becomes diverse or complicated, a registration area for the UE or a tracking area list for paging may not accurately reflect an actual movement of the UE. Accordingly, the mobility management device (e.g., the mobility management device 150) according to embodiments may allocate a DTAL for each UE. The mobility management device 150 may predict the moving path of the UE and may identify cells (or a plurality of gNBs) based on a result of the prediction. The mobility management device 150 may configure a DTAL including tracking areas including the cells (or gNBs). A gNB is a node for a 5G base station and may provide one or more cells. Hereinafter, in the present disclosure, for a meaning of indicating a geographical area, terms of a cell and a base station (e.g., the gNB) may be used interchangeably.

Even in the same network environment, a DTAL (or a size of the DTAL) may be configured differently for each UE. For example, for a first UE 301, the mobility management device 150 may determine a first DTAL 311. The mobility management device 150 may allocate the first DTAL 311 to the first UE 301. The first DTAL 311 (or a size of the first DTAL 311) may be determined based on at least one of a previous access history of the first UE 301, a mobility pattern of the first UE 301, a connection time (or a residence time) per gNB of the first UE 301, the number of cells (or gNBs) to pass through, or a paging history of the first UE 301. For a second UE 303, the mobility management device 150 may determine a second DTAL 313. The mobility management device 150 may allocate the second DTAL 313 to the second UE 303. The second DTAL 313 (or a size of the second DTAL 313) may be determined based on at least one of a previous access history of the second UE 303, a mobility pattern of the second UE 303, a connection time (or a residence time) per gNB of the second UE 303, the number of cells (or gNBs) to pass through, or a paging history of the second UE 303.

According to an embodiment, the mobility management device 150 may perform a paging procedure based on a DTAL. A size of the DTAL may be smaller than a size of another TAL (e.g., the TAL #1 101, the TAL #2 103, the TAL #3 105, and the TAL #4 107). For example, a size of a TAL may be defined as the number of tracking areas included in the TAL. As another example, the size of the TAL may be defined as the number of cells (or gNBs). As still another example, the size of the TAL may be defined as a size of a physical area covered by a tracking area of the TAL. Due to the small size of the DTAL, the number of required paging messages may be reduced.

According to an embodiment, the mobility management device 150 may allocate, to a UE, a DTAL for a registration procedure. Since the DTAL corresponds to a registration area, the DTAL may be referred to as a dynamic registration area. Each UE may not perform the registration procedure even when moving from a TAL (meaning a general TAL, not a DTAL) (e.g., the TAL #1 101) to another TAL (meaning a general TAL, not a DTAL) (e.g., the TAL #4 107). For example, in a case that the first UE 301 moves outside a geographical range of the first DTAL 311, the first UE 301 may perform the registration procedure. In addition, for example, even when the second UE 303 moves beyond a boundary region of the TAL (e.g., the TAL #1 101, the TAL #2 103, the TAL #3 105, and the TAL #4 107), if the UE 303 is within a range of the second DTAL 313, the UE 303 may not initiate the registration procedure. That is, by allocating a DTAL reflecting a moving path of the UE, the number of registration procedures in the network may be reduced.

According to an embodiment, the mobility management device 150 may allocate DTALs having different sizes for each UE. For example, the mobility management device 150 may apply a Dynamic TAL having a large size to UEs having large mobility, thereby reducing the number of registration procedures. For example, the mobility management device 150 may apply a DTAL smaller than before to UEs having small mobility, thereby reducing the number of required paging messages. The mobility management device 150 may set a size of the DTAL based on learning of the number of occurrences of the paging procedure.

Hereinafter, in the present specification, an operation of the mobility management device 150 for setting at least one gNB for setting a DTAL (or a size of the DTAL) will be described. For example, the mobility management device 150 may identify candidate gNBs for configuring the DTAL based on a residence time for each cell (or gNB) of a UE. For example, the mobility management device 150 may determine a size of the DTAL based on the number of cells (or gNB) through which the UE passes. For example, the mobility management device 150 may determine the size of the DTAL based on the number of occurrences of the paging procedure.

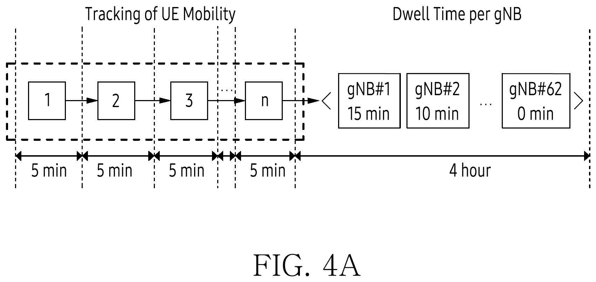

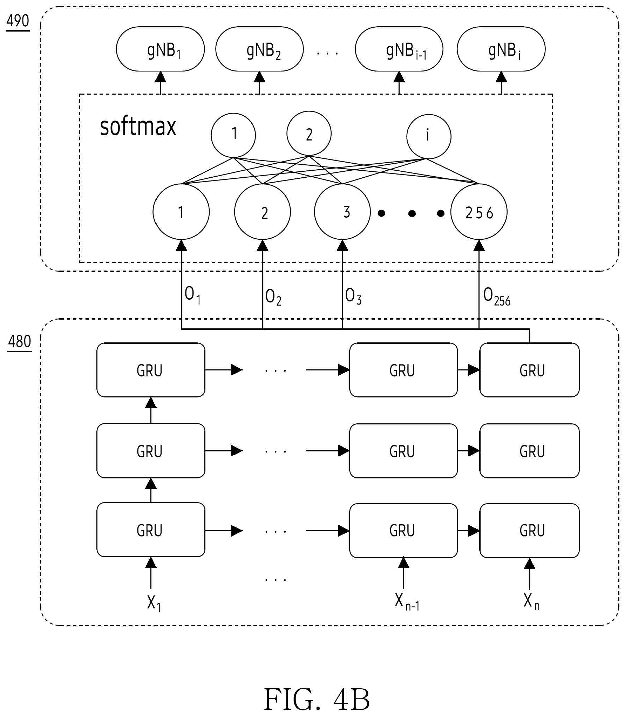

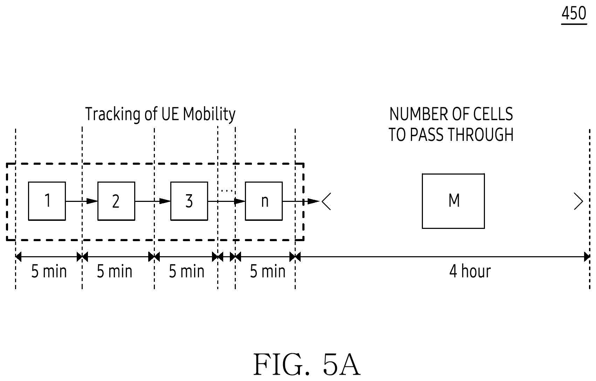

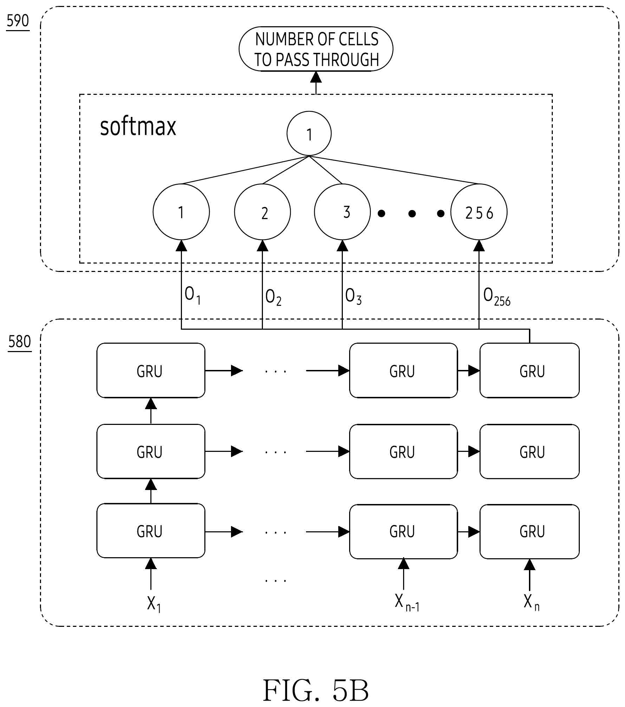

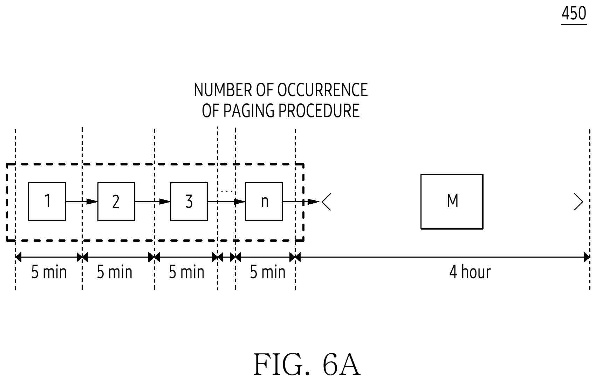

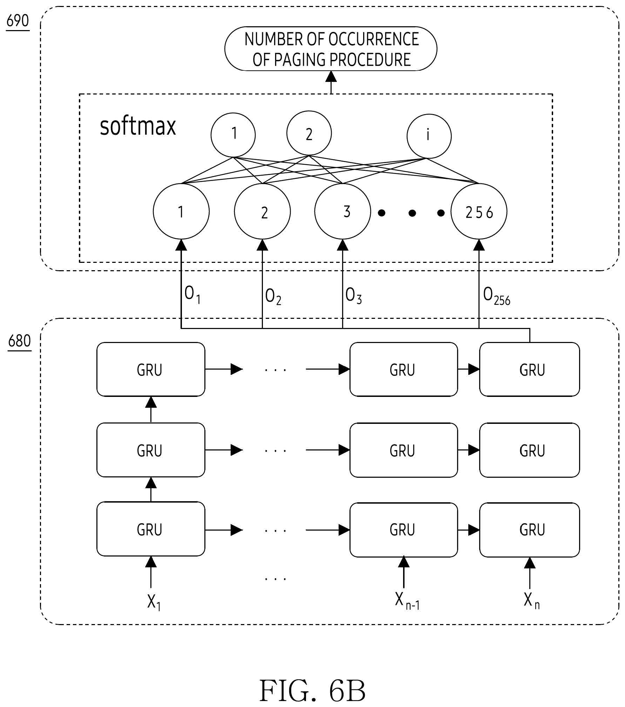

An operation of the mobility management device 150 for identifying gNBs (or candidate gNBs) for configuring the DTAL based on the residence time for each gNB of the UE will be described in FIG. 4A and FIG. 4B. An operation of the mobility management device 150 for determining the size of the DTAL based on the number of cells (or gNB) through which the UE passes will be described in FIG. 5A and FIG. 5B. An operation of the mobility management device 150 for determining the size of the DTAL based on the number of occurrences of the paging procedure will be described in FIG. 6A and FIG. 6B.

FIG. 4A illustrates an example of learning of user equipment (UE) mobility according to an embodiment.

Referring to FIG. 4A, a computing device for learning may perform tracking of UE mobility per unit time and may use a result of the performance as input data. In this case, previous location paths of a time unit (e.g., 5 minutes) are connected for each UE, so that one sequence (hereinafter, mobility sequence information) for each UE may be generated as input data for the learning. For example, 1 to n means an index (e.g., a tracking area, a RAN area, a gNB, or a cell) of a path through which a UE moves per unit time.

A mobility management device (e.g., AMF or MME) or the computing device (e.g., a network data analytics function (NWDAF)) (hereinafter, an electronic device) for the mobility management device may generate output data based on the input data. According to an embodiment, the output data means a residence time for each gNB of a UE. The mobility management device or the computing device for the mobility management device may obtain the residence time for each gNB of the UE based on mobility sequence information of the UE. An output may consist of one vector. A value of each vector may be represented as a gNB and a residence time in the gNB. For example, a location of an element of a vector may indicate a sequential gNB ID, and a value of the element may indicate a residence time of a UE corresponding to the gNB ID. The output data may include a residence time for each gNB within a designated time (e.g., 4 hours). For example, the output data may include a predicted residence time for each gNB within the designated time (e.g., 4 hours).

For example, a total of 62 gNBs (a gNB #1, a gNB #2, ..., a gNB #62) may be learning targets for the UE mobility. A residence time corresponding to each gNB may be determined as an element value of a vector. As an example, a residence time corresponding to the gNB #1 may be determined as 15 minutes, and a residence time corresponding to the gNB #2 may be determined as 10 minutes. By representing as one vector instead of an existing method of representing a UE location per time as a continuous sequence, a learning time and a learning amount may be greatly reduced.

According to an embodiment, as the previous location paths of the time unit (e.g., 5 minutes) are connected for each UE, one sequence (hereinafter, mobility sequence information) for each UE may be generated as input data for the learning. After one sequence for each UE is generated, a residence time corresponding to each gNB during the designated time (e.g., 4 hours) may be set as a ground truth of supervised learning in a learning model for the UE mobility. A machine learning model described below may be trained based on the input data and the ground truth. Based on the input data, output data of the machine learning model may be identified. Based on a comparison between the output data and the ground truth, training of the machine learning model may be performed.

FIG. 4B illustrates an example of a machine learning model according to an embodiment.

Referring to FIG. 4B, as an example of the machine learning model, a stacked recurrent neural network (RNN) (e.g., using a gated recurrent unit (GRU)) 480 that learns sequential inputs and a Fully Connected (FC) neural network 490 for generating an output may be used. The RNN means an AI model of an RNN series, and models of the RNN series such as a long short-term memory (LSTM) or the GRU may be used. Meanwhile, FIG. 4B is illustrative, and for machine learning according to embodiments of the present disclosure, another AI model other than the RNN may be used as a substitute.

The stacked GRU 480 may consist of three layers including GRU cells per time in each layer. The three layers may include a first layer, a second layer, and a third layer in an order from a lower direction to an upper direction. The first layer is an input layer for receiving a previous location path Xn of a UE. In the input layer, Xn input to each GRU cell indicates previous location information of a fixed time interval and may be sequentially input by a length of an input sequence from X1 to Xn. The second layer and the third layer may be hidden layers not involved in input and output. Although three layers are described in FIG. 4B, the number of layers (e.g., three) and the number of nodes (e.g., n) of the stacked GRU 480 may be set to an optimal value according to an application environment. Since outputs of the GRU cells at nodes are transmitted to both a next step (from a time "m" to a time "m+1") and a next layer (e.g., from the second layer to the third layer), an output of a last GRU cell of a highest layer becomes a final output of the stacked GRU 480. In FIG. 4B, the number of final outputs of the stacked GRU 480 has been illustrated as 256, but is not limited thereto. For example, the number of final outputs of the stacked GRU 480 may be set to 128.

An output layer of the proposed machine learning model indicates, by using the FC neural network 490, a time during which a UE stays at a corresponding gNB for a designated time (e.g., 4 hours) thereafter, for each gNB, as a ratio (%). The FC neural network 490 may receive the output of the stacked GRU 480 as an input. The FC neural network 490 may generate output data by i, which is the number of gNBs to be predicted. A softmax activation function used in the FC neural network 490 outputs a value normalized to a value between 0 and 1 from an input value, and has a characteristic that a sum of the values is always 1. Accordingly, values of the output data indicate a residence time of the UE for each gNB as a ratio (%).

According to an embodiment, based on a prediction result for a moving path of a UE, a mobility management device (e.g., AMF, or MME) may allocate a dynamic tracking area list (DTAL) for each UE. A size of the DTAL may be set differently for each UE. The mobility management device may change the size of the DTAL according to the moving path (or location movement) of the UE. For example, output data of the proposed machine learning model may be output as a value between 0 and 1 by the softmax activation function. The mobility management device may identify gNBs having a value equal to or greater than a threshold value. The mobility management device may allocate the size of the DTAL based on the identified gNBs. As an example, among 62 gNBs, gNBs having a value equal to or greater than 0.1 according to the output data of the machine learning model may be 5. The mobility management device may determine the size of the DTAL based on the 5 gNBs having the value equal to or greater than 0.1 according to the output data of the machine learning model.

FIG. 5A illustrates an example of learning of user equipment (UE) mobility according to an embodiment.

Referring to FIG. 5A, a computing device for learning may perform tracking of UE mobility per unit time, and may use a result of the performance as input data. In this case, previous location paths of a time unit (e.g., 5 minutes) are connected for each UE, so that one sequence (hereinafter, mobility sequence information) for each UE may be generated as input data for the learning. For example, 1 to n means an index (e.g., a tracking area, a RAN area, a gNB, or a cell) of a path through which a UE moves per unit time.

A mobility management device (e.g., AMF or MME) or the computing device (e.g., a network data analytics function (NWDAF)) (hereinafter, an electronic device) for the mobility management device may generate output data based on the input data. According to an embodiment, the output data means the number of cells (or gNBs) through which a UE passes. The mobility management device or the computing device for the mobility management device may obtain the number of cells (or gNBs) through which the UE passes, based on mobility sequence information of the UE. An output may consist of one value (or the number of cells). The output data may include the number of cells through which the UE passes within a designated time (e.g., 4 hours). For example, the output data may include the number of cells predicted to be passed by the UE within the designated time (e.g., 4 hours).

For example, a total of 62 gNBs (a gNB #1, a gNB #2, ..., a gNB #62) may be learning targets for the UE mobility. As an example, among the total 62 gNBs, the number of cells (or gNBs) predicted to be passed for 4 hours may be determined as M.

According to an embodiment, as the previous location paths of the time unit (e.g., 5 minutes) are connected for each UE, one sequence (hereinafter, mobility sequence information) for each UE may be generated as input data for the learning. After one sequence for each UE is generated, the number of cells (or gNB) passed during the designated time (e.g., 4 hours) may be set as a ground truth of supervised learning in a learning model for the UE mobility. A machine learning model described below may be trained based on the input data and the ground truth. Based on the input data, output data of the machine learning model may be identified. Based on a comparison between the output data and the ground truth, training of the machine learning model may be performed.

FIG. 5B illustrates an example of a machine learning model according to an embodiment.

Referring to FIG. 5B, as an example of the machine learning model, a stacked RNN (e.g., using a gated recurrent unit (GRU)) 580 that learns sequential inputs and a Fully Connected (FC) neural network 590 for generating an output may be used. The RNN means an AI model of an RNN series, and models of the RNN series such as a long short-term memory (LSTM) or the GRU may be used. Meanwhile, FIG. 5B is illustrative, and for machine learning according to embodiments of the present disclosure, another AI model other than the RNN may be used as a substitute.

The stacked GRU 580 may consist of three layers including GRU cells per time in each layer. The three layers may include a first layer, a second layer, and a third layer in an order from a lower direction to an upper direction. The first layer is an input layer for receiving a previous location path Xn of a UE. In the input layer, Xn input to each GRU cell indicates previous location information of a fixed time interval, and may be sequentially input by a length of an input sequence from X1 to Xn. The second layer and the third layer may be hidden layers not involved in input and output. Although three layers are described in FIG. 5B, the number of layers (e.g., 3) and the number of nodes (e.g., n) of the stacked GRU 580 may be set to an optimal value according to an application environment. Since outputs of the GRU cells at nodes are transmitted to both a next step (from a time "m" to a time "m+1") and a next layer (e.g., from the second layer to the third layer), an output of a last GRU cell of a highest layer becomes a final output of the stacked GRU 580. In FIG. 5B, the number of final outputs of the stacked GRU 580 has been illustrated as 256, but is not limited thereto. For example, the number of final outputs of the stacked GRU 580 may be set to 128.

An output layer of the above-described machine learning model indicates, by using the FC neural network 590, the number of cells to be passed through during the designated time (e.g., 4 hours). The FC neural network 590 may receive an output of the stacked GRU 580 as an input. The FC neural network 590 may generate, as output data, the number of cells through which the UE passes during the designated time.

According to an embodiment, based on a prediction result for a moving path of the UE, a mobility management device (e.g., AMF, or MME) may allocate a DTAL for each UE. A size of the DTAL may be set differently for each UE. The mobility management device may change the size of the DTAL according to the number of cells through which the UE passes during the designated time. For example, output data of the above-described machine learning model may be output as a standard score through the FC neural network 590 (or a dense layer). The mobility management device may identify the number of cells through which the UE passes during the designated time through the standard score. As an example, in a case that the number of cells through which the UE passes during the designated time is 5, the mobility management device may determine the size of the DTAL based on 5 gNBs. According to an embodiment, the mobility management device may determine the size of the DTAL by identifying the number of cells through which the UE passes during the designated time through the above-described machine learning model, and applying a correction value to the identified number.

FIG. 6A illustrates an example of learning of the number of occurrences of a paging procedure for a user equipment (UE) according to an embodiment.

Referring to FIG. 6A, a computing device for learning may perform tracking the paging procedure for the UE per unit time and may use a result of the performance as input data. At this time, by identifying the number of occurrences of the paging procedure of a time unit (e.g., 5 minutes) for each UE, one sequence (hereinafter referred to as paging procedure sequence information) for each UE may be generated as input data for the learning. For example, 1 to n means the number of occurrences of the paging procedure in which the UE occurs every unit time.

A mobility management device (e.g., AMF or MME) or the computing device (e.g., a network data analytics function (NWDAF)) (hereinafter, an electronic device) for the mobility management device may generate output data based on the input data. According to an embodiment, the output data means the number of paging procedures generated during a designated time. The mobility management device or the computing device for the mobility management device may obtain the number of occurrences of the paging procedure of the UE based on paging procedure sequence information of the UE. An output may consist of one value (or the number of occurrences of the paging procedure). The output data may include the number of occurrences of the paging procedure for the UE within the designated time (e.g., 4 hours). For example, the output data may include the number of occurrences of the paging procedure expected for the UE within the designated time (e.g., 4 hours). For example, the number of paging procedures expected to be generated for 4 hours may be determined as M.

According to an embodiment, as the number of occurrences of paging procedures of the time unit (e.g., 5 minutes) for each UE is identified, one sequence (hereinafter, paging procedure sequence information) for each UE may be generated as input data for the learning. After one sequence for each UE is generated, the number of occurrences of the paging procedure during the designated time (e.g., 4 hours) may be set as a ground truth of supervised learning in a learning model for UE mobility. A machine learning model described below may be trained based on the input data and the ground truth. Based on the input data, output data of the machine learning model may be identified. Based on a comparison between the output data and the ground truth, training of the machine learning model may be performed.

FIG. 6B illustrates an example of a machine learning model according to an embodiment.

Referring to FIG. 6B, as an example of the machine learning model, a stacked RNN (e.g., using a gated recurrent unit (GRU) 680 that learns sequential inputs and a Fully Connected (FC) neural network 690 for generating an output may be used. The RNN means an AI model of an RNN series, and models of the RNN series such as a long short-term memory (LSTM) or the GRU may be used. Meanwhile, FIG. 6B is illustrative, and for machine learning according to embodiments of the present disclosure, another AI model other than the RNN may be used as a substitute.

The stacked GRU 680 may consist of three layers including GRU cells per time in each layer. The three layers may include a first layer, a second layer, and a third layer in an order from a lower direction to an upper direction. The first layer is an input layer for receiving the number of occurrences Xn of the paging procedure of the UE. In the input layer, Xn input to each GRU cell indicates the number of occurrences of the paging procedure of a fixed time interval, and may be sequentially input by a length of an input sequence from X1 to Xn. The second layer and the third layer may be hidden layers not involved in input and output. Although three layers are described in FIG. 6B, the number (e.g., 3) of layers and the number (e.g., n) of nodes of the stacked GRU 680 may be set to an optimal value according to an application environment. Since outputs of the GRU cells at nodes are transmitted to both a next step (from a time "m" to a time "m+1") and a next layer (e.g., from the second layer to the third layer), an output of a last GRU cell of a highest layer becomes a final output of the stacked GRU 680. In FIG. 6B, the number of final outputs of the stacked GRU 680 has been illustrated as 256, but is not limited thereto. For example, the number of final outputs of the stacked GRU 680 may be set to 128.

An output layer of the above-described machine learning model indicates, by using the FC neural network 690, the number of paging occurrences during a designated time (e.g., 4 hours). The FC neural network 690 may receive an output of the stacked GRU 680 as an input. The FC neural network 690 may generate, as output data, the number of paging procedures predicted to be generated during the designated time.

According to an embodiment, based on a prediction result for the number of occurrences of the paging procedure for the UE, a mobility management device (e.g., AMF, or MME) may allocate a DTAL for each UE. A size of the DTAL may be set differently for each UE. The mobility management device may change the size of DTAL according to the number of occurrences of the paging procedure predicted during the designated time. For example, the output data of the above-described machine learning model may be output as a standard score through the FC neural network 690 (or a dense layer). The mobility management device may identify the number of occurrences of the paging procedure during the designated time through the standard score. As an example, in a case that the number of occurrences of the paging procedure predicted during the designated time is 20, the mobility management device may predict that 20 paging procedures will be generated during the designated time. The predicted number of occurrences of paging procedures may be used to determine the size of the DTAL. According to an embodiment, the predicted number of occurrences of the paging procedure may be used to change the size of the DTAL identified based on a residence time for each cell. According to an embodiment, the predicted number of occurrences of the paging procedure may be used to change the size of DTAL identified based on the number of cells (or gNBs) through which the UE passes. For example, a DTAL having a small size may be allocated for a UE in which the predicted number of occurrences of the paging procedure is equal to or greater than a reference number. A DTAL having a large size may be allocated for a UE in which the predicted number of occurrences of the paging procedure is less than the reference number.

According to an embodiment, the mobility management device may determine (or identify) a size of a DTAL based on the predicted number of occurrences of the paging procedure. The mobility management device may determine the size of the DTAL as a size mapped according to the predicted number of occurrences of the paging procedure. According to the above-described embodiment, an optimized TAL according to a network environment may be set.

Referring to FIG. 4A to FIG. 6B, the mobility management device may determine candidate gNBs for configuring a DTAL based on a residence time for each gNB according to FIG. 4A and FIG. 4B. For example, the mobility management device may determine a size of the DTAL based on at least one of the number of cells (or gNBs) through which the UE passes according to FIG. 5A and FIG. 5B or the number of occurrences of the paging procedure for the UE according to FIG. 6A and FIG. 6B.

The DTAL indicates a set of cells corresponding to a geographic area determined based on mobility of a UE. On each cell of the cells of the DTAL, a paging message for the UE may be transmitted. A size of the DTAL may indicate the number of cells predicted according to the mobility of the UE (e.g., the number of gNBs, the number of DUs of a gNB, or the number of cells provided through the gNB). The mobility management device may determine, among the candidate gNBs, at least one gNB to configure the DTAL based on the number of cells (or gNBs) through which the UE passes. The mobility management device may allocate the DTAL configured with the at least one gNB to the UE.

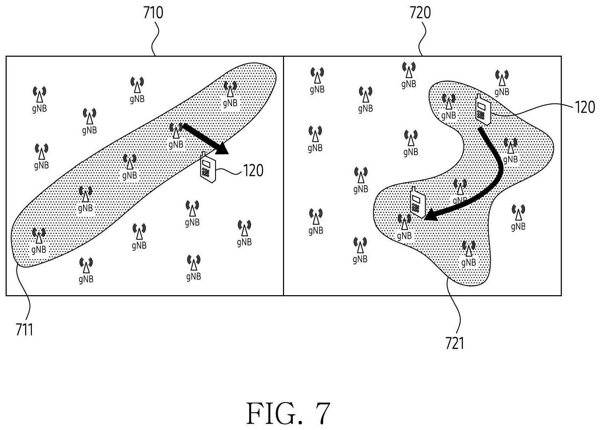

FIG. 7 illustrates an example of a change of a dynamic tracking area according to a movement of a UE according to an embodiment. The UE exemplifies a terminal 120. The dynamic tracking area means a tracking area including a DTAL. Existing TA and TAL are used as a basic unit for managing and configuring a network in a core network. The DTAL according to embodiments of the present disclosure may be configured independently of the TAL for a paging procedure and a registration procedure. The DTAL may function as a registration area of the registration procedure and, at the same time, may function as a TAL for the paging procedure. In order to reduce an influence of configuration of the DTAL on other information (e.g., IEs) or other procedures, the DTAL may be operated together with the existing TAL.

With reference to FIG. 7, the DTAL is UE-specific in order to manage mobility of the UE. As an example, in a network environment 710, a first DTAL 711 for a UE 120 may be assigned to the UE 120. As an example, the first DTAL 711 may be generated by configuring a list in an order of gNBs in which the UE 120 is expected to stay for a long time. Once the first DTAL 711 is assigned, the assigned first DTAL 711 is valid until the UE 120 is out of an area of the first DTAL 711. In a case that the UE 120 moves within a geographic range (e.g., a geographic area covered by cells of the first DTAL) of the first DTAL 711, the UE 120 may not perform the registration procedure. In a case that the UE 120 moves out of tracking areas of the first DTAL 711, the UE 120 may initiate the registration procedure. For initiation of the registration procedure, the UE 120 may transmit a registration request message to a mobility management device (e.g., AMF, or MME). The mobility management device may transmit a registration accept message, a registration reject message, or a registration failure message to the UE 120. According to an embodiment, the registration accept message may include modified DTAL information (e.g., a second DTAL 721 described later).

The DTAL may be dynamically changed according to movement of the UE. In a case that the UE 120 moves out of a range of the tracking areas of the first DTAL 711, the mobility management device may reallocate the DTAL of the UE 120. The mobility management device may determine the DTAL (or a size of the DTAL) by using the above-described machine learning model, and may allocate it to the UE 120.

When the UE 120 moves out of the range of the tracking areas of the first DTAL 711, the UE 120 may transmit the registration request message to the mobility management device. Accordingly, when receiving the registration request message, the mobility management device may identify that the UE 120 is located out of the range of the tracking areas of the first DTAL 711. The mobility management device may identify that allocation of a new DTAL to the UE 120 is required. Based on identifying that the UE 120 moves out of the range of the tracking areas of the first DTAL 711, the mobility management device may determine the new DTAL. The mobility management device may determine the second DTAL 721, which is the new DTAL, based on a machine learning result. The second DTAL 721 may be determined based on at least one of previous access history of the UE 120, a mobility pattern of the UE 120, an access time (or a residence time) for each gNB of the UE 120, the number of cells through which the UE 120 passes, or the number of occurrences of the paging procedure of the UE 120. The mobility management device may allocate the second DTAL 721 to the UE 120.

Although not illustrated in FIG. 7, according to an embodiment, the DTAL may be indicated by being included in a message as an IE in a form of a list in the same manner as the TAL. For example, the registration accept message may include the DTAL instead of a registration area. That is, the registration area may be replaced with the DTAL. According to an additional embodiment, indication information for indicating that it is the DTAL may be used. Based on receiving the DTAL from the AMF, the indication information may be used by the UE or a RAN node to distinguish whether it is the TAL or the DTAL. A message including the DTAL may further include the indication information.

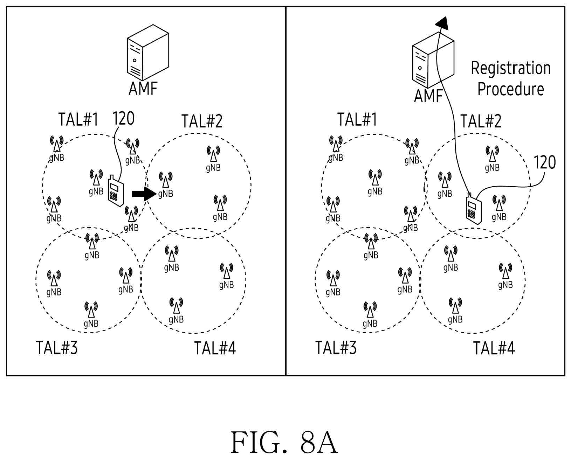

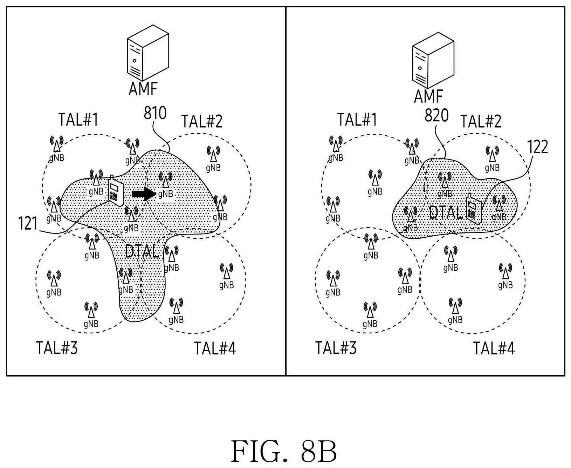

FIG. 8A and FIG. 8B illustrate examples of a dynamic tracking area and a registration procedure according to an embodiment. As a network entity for mobility management, an AMF is exemplified.

Referring to FIG. 8A, the AMF may manage mobility of a UE 120. The AMF may use a plurality of TALs (e.g., a TAL #1, a TAL #2, a TAL #3, and a TAL #4). The AMF may allocate one TAL (e.g., the TAL #1) among the plurality of TALs as a registration area for the UE 120. When the UE 120 moves out of the allocated TAL (e.g., the TAL #1), the UE 120 may perform the registration procedure. In this case, a UE located at a boundary region of the TAL or moving beyond the TAL may generate signaling for the registration procedure.

Referring to FIG. 8B, a DTAL may be allocated for each UE. A predicted moving path or the predicted number of occurrences of a paging procedure may be different for each of UEs. The AMF may provide the DTAL for each UE. The DTAL may include cells (or gNBs) identified based on output data of the above-described machine learning model. The DTAL may include tracking areas of cells identified based on the output data of the above-described machine learning model or tracking areas of base stations (e.g., gNBs) providing the cells.

According to an embodiment, the AMF may allocate a DTAL 810 for a UE 121. The AMF may allocate a DTAL 820 for a UE 122. The AMF may allocate the DTAL 810 having a large size for the UE 121 having small mobility. The AMF may allocate the DTAL 820 having a small size for the UE 122 having large mobility. As described in FIG. 1B, the paging procedure may be performed in three stages. In third paging, since a paging message is transmitted to a TAL, most of paging signaling may be generated in the third paging. Accordingly, according to an embodiment, the AMF may determine the number of cells of the DTAL based on a movement radius of a UE. The movement radius of UE may indicate the number of cells or the number of TAs on a path of the UE during a unit time. For example, the AMF may allocate the DTAL 820 having a small size for a UE (e.g., the UE 122) having a large movement radius. As the movement radius increases, the number of cells of the DTAL is reduced, and thus the number of signals for paging signaling may be reduced. For example, the AMF may allocate the DTAL 810 having a large size for a UE (e.g., the UE 121) having a small movement radius. As the movement radius is reduced, the number of cells of the DTAL increases, and thus the number of times that the registration procedure is performed may be reduced. As an example, when the number of cells on an expected moving path of a UE during a designated time is equal to or greater than a threshold value, the AMF may determine a first value as the number of cells of the DTAL. When the number of cells on the expected moving path of the UE during the designated time is less than the threshold value, the AMF may determine a second value greater than the first value as the number of cells of the DTAL.

According to an embodiment, the AMF may predict the number of occurrences of the paging procedure. The AMF may change a size of the DTAL based on the predicted number of occurrences of the paging procedure. For example, the AMF may allocate a DTAL having a smaller size for the UE in which the paging procedure is frequently generated than for other UEs. In a case that the DTAL having a small size is allocated, the number of signals for paging signaling for the UE may be reduced. For example, the AMF may allocate a DTAL having a larger size for the UE in which the paging procedure is not frequently generated than for other UEs. The paging procedure being generated lower than a designated frequency indicates that the number of occurrences of downlink data for the UE is relatively small. Accordingly, the AMF may allocate the number of cells of the DTAL for the UE to be greater than the number of cells of the DTAL for a general UE (e.g., a UE in which the paging procedure is generated equal to or greater than the designated frequency). Since the DTAL having a larger size is allocated, the number of times that the registration procedure is performed for the UE may be reduced.

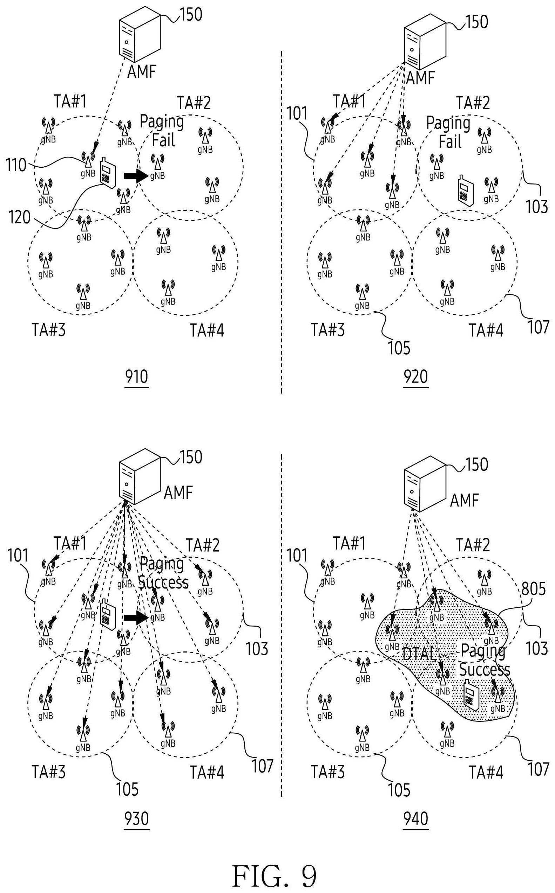

FIG. 9 illustrates an example of a dynamic tracking area and paging according to an embodiment. The paging exemplifies multi-stage paging (e.g., the three-stage paging illustrated in FIG. 1B). A last stage of the multi-stage paging may include broadcasting paging messages on all cells of a tracking area list (a TAL) or a dynamic tracking area list (i.e., DTAL).

Referring to FIG. 9, in the paging, signaling generated in a third paging stage may be reduced through a DTAL 905 having a smaller size than an existing TAL (e.g., a TAL configured with a TA #1, a TA #2, a TA #3, and a TA #4). A three-stage paging procedure may be performed in an order of a first paging stage 910 including paging to a cell of a base station 110, a second paging stage 920 including pagings on cells within a tracking area list, and a third paging stage 930 including pagings on all cells of the tracking area list. In this case, in the third paging stage 930, which is a last stage, paging messages may be broadcast on all cells of a plurality of tracking areas included in the TAL. However, since a size of the TAL corresponds to entire tracking areas in a commercial network, most of paging signalings may be generated in the third paging stage 930. Signaling overhead may be generated due to paging performed regardless of a movement radius of a UE.

Through the DTAL 905 identified based on output data of the above-described machine learning model, the number of signaling in a paging procedure may be reduced. For example, the third paging stage 930 of the multi-stage paging may be replaced with a DTAL-based paging procedure 940. As another example, instead of the multi-stage paging, the DTAL-based paging procedure 940 may be used as single-stage paging. A size of the DTAL 905 may be smaller than a size of another TAL (e.g., the TAL configured with the TA #1, the TA #2, the TA #3, and the TA #4). When the size of the DTAL 905 is reduced, the number of occurrences of a registration procedure increases, but the number of signaling for each paging procedure is reduced. In addition, a mobility management device 150 may allocate the DTAL 905 based on mobility of a UE 120, thereby reducing the size of the DTAL 905 and simultaneously reducing the number of times that the registration procedure is performed. Accordingly, as third paging is performed based on the DTAL 905, overall signaling may be greatly reduced.

The number of signaling of the registration procedure and the number of signaling of the paging procedure according to the size of the DTAL 905 are in a trade-off relationship. According to a geographic characteristic and a disposition of a base station, the size of the DTAL 905 may be adjusted. In addition, since a movement pattern is different for each UE, UEs may have different sizes of DTAL. The mobility management device 150 may reduce a frequency of the registration procedure by accurately predicting a movement pattern of the UE 120 even if the size of the DTAL 905 decreases. Meanwhile, UEs having a relatively wide movement radius, such as an autonomous vehicle or a drone, may use a large size of the DTAL. In addition, for UEs in which paging is frequently generated since traffic generation is frequent, a DTAL having a relatively small size may be allocated.

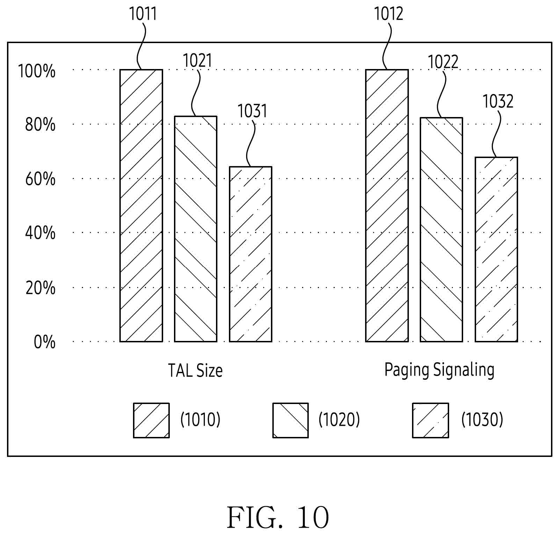

FIG. 10 illustrates examples of performance of a dynamic tracking area according to an embodiment. The dynamic tracking area means a tracking area within the above-described DTAL.

Referring to FIG. 10, graphs of a size of a TAL (or a DTAL) according to schemes for tracking area allocation and a ratio of signaling according to a paging procedure are illustrated.

In a case 1010, a fixed TAL may be set. In a case 1020, a DTAL having a fixed size for each UE may be set. In a case 1030, DTALs having different sizes for each UE may be set.

Referring to a graph 1011, a graph 1021, and a graph 1031, a size of the TAL set in the case 1010 may be set as a reference size (i.e., 100%). The graph 1011 may indicate that the size of the TAL set in the case 1010 is set as the reference size (i.e., 100%). The graph 1021 may indicate a ratio of a size of the DTAL set in the case 1020 for the reference size. The graph 1031 may indicate a ratio of a size of the DTAL set in the case 1030 for the reference size. In the case 1030 in which the DTALs having different sizes for each UE are set, a DTAL having a smallest size may be set. The size of the DTAL set in the case 1030 may be reduced by about 16% compared to the size of the DTAL set in the case 1020. The size of the DTAL set in the case 1030 may be reduced by about 38% compared to the size of the DTAL set in the case 1010.

Referring to a graph 1012, a graph 1022, and a graph 1032, in the case 1010, the number of signaling according to the paging procedure may be set as a reference number (i.e., 100%). The graph 1012 may indicate that the number of signaling according to the paging procedure is set as the reference number (i.e., 100%) in the case 1010. The graph 1022 may indicate a ratio of the number of signaling according to the paging procedure in the case 1020, for the reference number. The graph 1032 may indicate a ratio of the number of signaling according to the paging procedure in the case 1030. In the case 1030 in which the DTALs having different sizes for each UE are set, the number of signaling according to the paging procedure may be smallest. The number of signaling according to the paging procedure in the case 1030 may be reduced by about 15% compared to the number of signaling according to the paging procedure in the case 1020. The number of signaling according to the paging procedure in the case 1030 may be reduced by about 35% compared to the number of signaling according to the paging procedure in the case 1010. Accordingly, in a case that the DTALs having different sizes for each UE are set as in the above-described embodiments, a signaling cost according to the paging procedure may be reduced. Accordingly, an operating cost of an AMF (or an MME) may be reduced.

In embodiments of the present disclosure, a method of providing a DTAL for each UE by applying a machine learning model to a core network (e.g., 5GC) of a mobile communication network has been described. According to the above-described embodiments, the number of paging procedures and the number of registration procedures may be reduced. As the DTAL is configured based on at least one of a residence time for each gNB, the number of cells (or gNBs) through which the UE passes, or the number of occurrences of the paging procedure, the number of the paging procedures and the number of the registration procedures may be reduced.

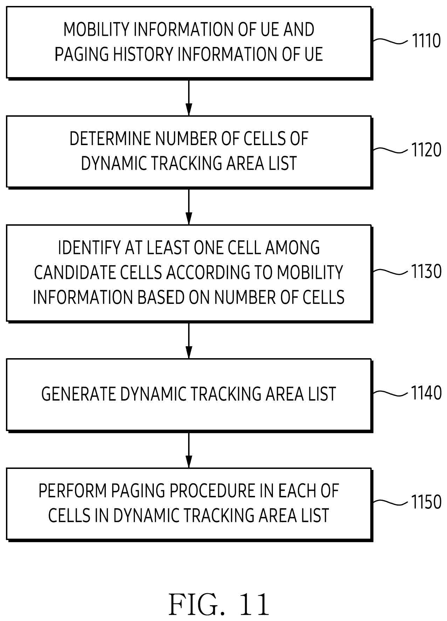

FIG. 11 illustrates an operation flow of a mobility management device for providing a dynamic tracking area according to embodiments. The mobility management device means the mobility management device (e.g., MME or AMF) described with reference to FIG. 1A to FIG. 10.

Referring to FIG. 11, in operation 1110, a mobility management device 150 may obtain mobility information of a UE and paging history information of the UE. For example, the mobility information of the UE may include at least one of information on access history during a first time interval and a moving path of the UE during the first time interval.

For example, the paging history information may include the number of occurrences of a paging procedure during the first time interval. The mobility management device 150 may obtain the paging history information based on identifying the number of occurrences of the paging procedure during the first time interval.

The paging procedure may be configured in multiple stages. The paging procedure may include first paging, second paging, and third paging. According to the first paging, a paging message may be broadcast on a cell through a base station. According to the second paging, a paging message may be broadcast on a tracking area through base stations. According to the third paging, a paging message may be broadcast on a plurality of tracking areas of the dynamic tracking area list through base stations. The dynamic tracking area list may include one or more dynamic tracking areas. Each dynamic tracking area may include one or more cells. The paging message may be broadcast in each of all cells indicated by the dynamic tracking area list. The mobility management device 150 may transmit paging messages to RAN nodes (e.g., gNBs) through an N2 interface. The paging message may include information on the dynamic tracking area list.

In operation 1120, the mobility management device 150 may determine the number of cells of the dynamic tracking area list. For example, the mobility management device 150 may determine the number of cells of the dynamic tracking area list based on the mobility information and the paging history information. For example, the mobility management device 150 may determine a size of the dynamic tracking area list based on determining the number of cells of the dynamic tracking area list.

According to an embodiment, the mobility management device 150 may set the mobility information as input data for a first prediction model. The mobility management device 150 may identify information on a connection time for each cell of the UE predicted in a second time interval as output data of the first prediction model. The mobility management device 150 may identify candidate cells (or the number of candidate cells) based on the information on the connection time for each cell of the UE predicted in the second time interval. The mobility management device 150 may identify cells exceeding a designated connection time as the candidate cells (or the number of candidate cells) based on the information on the connection time for each cell of the UE predicted in the second time interval. For example, the mobility management device 150 may identify information on a residence time for each cell (e.g., gNB) of the UE predicted in the second time interval by using the first prediction model. For example, the first prediction model may correspond to the machine learning model illustrated in FIG. 4B.

According to an embodiment, the mobility management device 150 may set the mobility information as input data of a second prediction model. The mobility management device 150 may identify the number of cells to which the UE is predicted to be connected in the second time interval as output data of the second prediction model. The mobility management device 150 may determine the number of cells of the dynamic tracking area list based on the number of cells to which the UE is predicted to be connected in the second time interval. For example, the second prediction model may correspond to the machine learning model illustrated in FIG. 5B.

According to an embodiment, a mobility management device 150 may set the paging history information as input data of a third prediction model. The mobility management device 150 may identify the number of occurrences of the paging procedure predicted in the second time interval as output data of the third prediction model. The mobility management device 150 may determine the number of cells of the dynamic tracking area list based on the number of occurrences of the paging procedure predicted in the second time interval. For example, the third prediction model may correspond to the machine learning model illustrated in FIG. 6B.

In operation 1130, the mobility management device 150 may identify at least one cell among candidate cells according to the mobility information based on the determined number of cells.

For example, the mobility management device 150 may identify (or determine) the candidate cells by using the first prediction model. The mobility management device 150 may determine the number of cells based on at least one of the number of cells of the dynamic tracking area list identified through the second prediction model or the number of cells of the dynamic tracking area list identified through the third prediction model among the candidate cells. The mobility management device 150 may identify at least one cell among the candidate cells based on the determined number of cells.

In operation 1140, the mobility management device 150 may generate a dynamic tracking area list. For example, the mobility management device 150 may generate the dynamic tracking area list based on the identified at least one cell. For example, the dynamic tracking area list may be UE-specific. The dynamic tracking area list may be uniquely allocated for the UE.

In operation 1150, the mobility management device 150 may perform the paging procedure in each of cells in the dynamic tracking area list. For example, the mobility management device 150 may perform the paging procedure in each of the cells in the dynamic tracking area list based on identifying downlink data for the UE.

The dynamic tracking area list may be used as a list of TAI for the paging procedure. The mobility management device 150 may transmit a paging message including the dynamic tracking area list to a node (e.g., an NG-RAN node) for the paging procedure. As illustrated in FIG. 2, the mobility management device 150 may transmit the paging message including the dynamic tracking area list to the node through the N2 interface. In addition, the dynamic tracking area list may be used as a list of TAI for a registration procedure. The mobility management device 150 may transmit a registration accept message to the UE in an initial access procedure or in response to a registration request procedure of the UE. The mobility management device 150 may transmit the registration accept message including the dynamic tracking area list to the UE.

In a case that the UE moves within a range of the dynamic tracking area list, the UE may not perform the registration procedure even if a fixed tracking area list is changed. Even if the fixed tracking area list is changed, since the UE does not perform the registration procedure, the number of registration procedures may be reduced.

According to an embodiment, the mobility management device 150 may determine the dynamic tracking area list having a size smaller than a size of a general TAL (i.e., a TAL not including the dynamic tracking area). For example, a size of a TAL or the dynamic tracking area list may be defined as the number of elements included in the list. As an example, the size of the list may mean the number of tracking areas included in the list. In addition, as an example, the size of the list may mean the number of base stations corresponding to the tracking areas included in the list.Additionally, as an example, the size of the list may mean the number of cells included in the list. As another example, the size of the TAL or the dynamic tracking area list may be defined as a physical area covered by the list. By allocating the dynamic tracking area list having a size smaller than the general TAL to the UE, the number of signaling for the paging procedure for the UE in an RRC idle mode may be reduced. Since the number of cells included in the dynamic tracking area list is smaller than the number of cells included in the TAL, the number of paging messages broadcast for each cell in the dynamic tracking area list may be reduced compared to the TAL.

According to an embodiment, the mobility management device 150 may change the dynamic tracking area list based on a movement of the UE. For example, when the UE moves out of a range of the previously allocated dynamic tracking area list, the mobility management device 150 may determine a new dynamic tracking area list. For example, the mobility management device 150 may identify that the UE has moved out of the range of the previously allocated dynamic tracking area list based on receiving a registration request message of the UE. The mobility management device 150 may identify a new predicted moving path of the UE. The mobility management device 150 may obtain new mobility information and/or new paging history information of the UE. The mobility management device 150 may determine the new dynamic tracking area list based on the new mobility information and/or the new paging history information.

According to an embodiment, the mobility management device 150 may provide the dynamic tracking area list to the UE through NAS signaling. For example, the mobility management device 150 may provide the dynamic tracking area list to the UE through an IE included in the registration accept message. As another example, the mobility management device 150 may provide the dynamic tracking area list to the UE through an IE included in a configuration update command message. The UE may obtain the dynamic tracking area list. When the UE moves out of an area range of the dynamic tracking area list, the UE may perform the registration procedure. In order to reduce the number of signaling for the registration procedure, the dynamic tracking area list may be formed across TALs. Even if the UE moves from one TAL to another TAL, the UE may not perform the registration procedure if the UE is within the dynamic tracking area list. The mobility management device 150 may configure the UE not to perform the registration procedure if the UE is within the range of the dynamic tracking area list.

According to an embodiment, the mobility management device 150 may identify a notification of the downlink data for the UE. The mobility management device 150 may perform the paging procedure in order to change a network connection mode of the UE from the RRC idle mode or an RRC inactive mode to an RRC connected mode.

If the mobility management device 150 does not receive the registration request message from the UE, the mobility management device 150 may guarantee that the UE is within the range of the dynamic tracking area list. In addition, if the mobility management device 150 receives the registration request message from the UE, the mobility management device 150 may change the dynamic tracking area list as in FIG. 7. Accordingly, the mobility management device 150 may guarantee that the UE is located within the range of the dynamic tracking area list currently set for the UE. Instead of performing a paging procedure for entire TALs of the mobility management device 150, by performing the paging procedure only within the dynamic tracking area list having a range smaller than the entire TALs, the total number of paging signaling may be reduced.

The dynamic tracking area list according to embodiments of the present disclosure may be used for both a registration area for the registration procedure and a TAI list for the paging procedure. In a case that a TAI list set as the registration area and a TAI list indicated on the N2 interface are identical, an implementation of the present disclosure may be identified. In addition, as a moving path changes, the dynamic tracking area list allocated to the UE may be changed based on the registration procedure or a configuration update procedure.

According to an embodiment, the mobility management device 150 may notify the UE or a RAN node of information (hereinafter, capability information) indicating that a function of the dynamic tracking area list is supported. The mobility management device 150 may transmit the capability information to the UE through a NAS message in order to notify that the dynamic tracking area list may be used in the registration procedure. The NAS message may be transmitted on an N1 interface. In addition, the mobility management device 150 may transmit, to the RAN node, a message including the capability information in order to notify that the dynamic tracking area list may be used in the paging procedure. The message may be transmitted on the N2 interface.

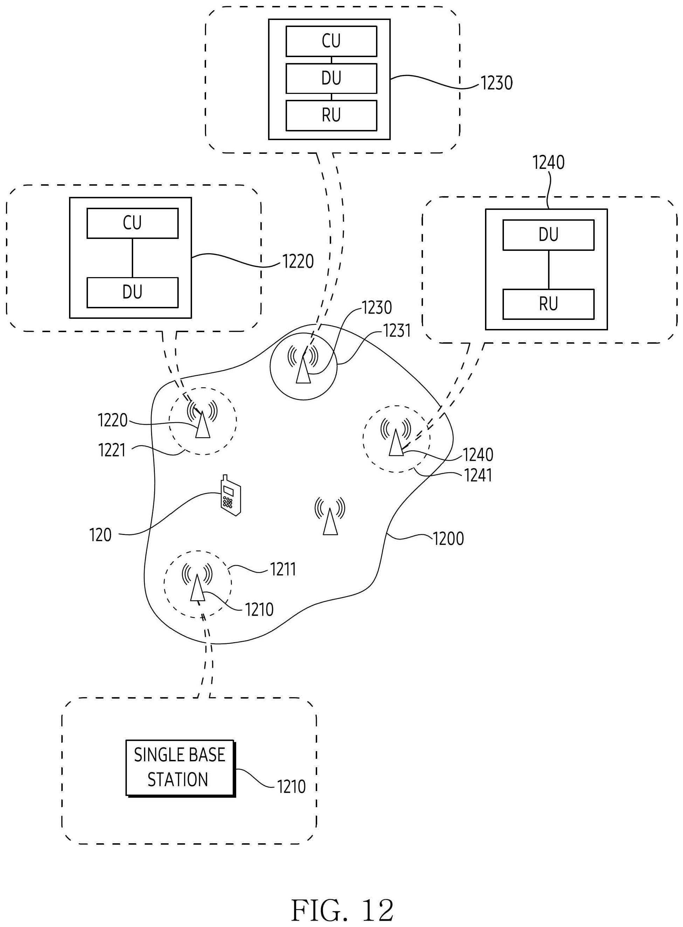

FIG. 12 illustrates examples of devices for providing cells of a dynamic tracking area list. In FIG. 12, a method of determining the number of cells of a DTAL according to implementation examples of a network node for providing a cell is described.

Referring to FIG. 12, a mobility management device 150 may configure a DTAL 1200. The DTAL 1200 may indicate an area of a plurality of cells determined according to mobility information of a UE and/or paging history information of the UE. For example, the DTAL 1200 may include a cell 1211, a cell 1221, a cell 1231, and/or a cell 1241. In general, each cell may be provided by a base station. In a communication system in which a cell radius of the base station is relatively large, each base station has been installed to include a function of a digital processing unit (or a distributed unit (DU)) and a radio frequency (RF) processing unit (a RF processing unit, or a radio unit (RU)). However, as a high frequency band is used in 4th generation (4G) and/or a subsequent communication system (e.g., 5G), and as cell coverage of the base station becomes smaller, the number of base stations for covering a specific area has increased. A burden of an installation cost of an operator for installing base stations has also increased. In order to minimize the installation cost of the base station, a structure has been proposed in which one or more RUs are connected to one DU through a wired network as the DU and the RU of the base station are separated, and one or more RUs distributed geographically to cover the specific area are disposed.

The DU may perform an upper layer function of a wireless network. For example, the DU may perform a function of a MAC layer and a portion of a PHY layer. Herein, the portion of the PHY layer means a portion performed at a higher stage among functions of the PHY layer, and may include, as an example, channel encoding (or channel decoding), scrambling (or descrambling), modulation (or demodulation), and layer mapping (or layer demapping). According to an embodiment, the DU may be replaced with and represented as a first network entity for a base station (e.g., a gNB) in embodiments of the present disclosure, as necessary.

The RU may perform a lower layer function of the wireless network. For example, the RU may perform a portion of the PHY layer and an RF function. Herein, the portion of the PHY layer means a portion performed at a relatively lower stage than the DU among functions of the PHY layer, and may include, as an example, iFFT transformation (or FFT transformation), CP insertion (or CP removal), and digital beamforming. The RU may be referred to as an "access unit (AU)", an "access point (AP)", a "transmission/reception point (TRP)", a "remote radio head (RRH)", a "radio unit (RU)", or another term having an equivalent technical meaning. According to an embodiment, the RU may be replaced with and represented as a second network entity for the base station (e.g., the gNB) in embodiments of the present disclosure, as necessary.

In addition to a deployment scenario in which the DU and the RU are distributed, 3GPP has introduced a distributed network structure according to a function split in order to reduce a burden in which functions of protocols of wireless communication are performed in one network entity. A base station according to embodiments may be implemented as a distributed deployment according to a centralized unit (CU) configured to perform a function of upper layers (e.g., packet data convergence protocol (PDCP), or radio resource control (RRC)) of an access network and a distributed unit (DU) configured to perform a function of lower layers. For example, between a core (e.g., a 5G core (5GC) or a next generation core (NGC)) and the wireless network, the base station may be implemented in a structure in which the CU, the DU, and the RU are disposed in order. In order to describe a relationship between the DU and the RU, an expression of a digital unit (DU) may be used, however, in the present disclosure, description of the digital unit (DU) may be understood as description of the distributed unit (DU). An interface between the CU and the distributed unit (DU) may be referred to as an F1 interface.

The centralized unit (CU) may perform a function of an upper layer than the DU. For example, the CU may perform a function of a radio resource control (RRC) layer and a packet data convergence protocol (PDCP) layer, and the DU and the RU may perform a function of a lower layer. The DU may perform functions of a radio link control (RLC) layer, a media access control (MAC) layer, and a portion of a physical (PHY) layer (high PHY), and the RU may perform remaining functions of the PHY layer (low PHY). In addition, as an example, the digital unit (DU) may be included in the distributed unit (DU) according to a distributed deployment implementation of the base station.

According to embodiments of the present disclosure, an AMF may determine cells according to a geographical path along which the UE moves, that is, a DTAL, based on deployment of network nodes providing the cells. Cells included in the DTAL may include not only a cell provided by a single base station but also a cell provided through each RU connected to the DU. For example, a network node for providing a cell may include at least one of a centralized unit (CU), a distributed unit (DU), and/or a radio unit (RU), or may include a single base station device (e.g., a network entity directly connected to a core network, or a base station (e.g., an NG-RAN node) implemented in which the CU and the DU are integrated into one entity).

According to an embodiment, the mobility management device 150 may determine the number of cells of the DTAL 1200 based on the number of base stations identified based on mobility information of a UE and/or paging history information of the UE. According to an embodiment, the mobility management device 150 may determine the number of cells of the DTAL 1200 based on the number of base stations identified based on mobility information of a UE and/or paging history information of the UE.

For example, the cell 1211 may be provided through a network node 1210. The network node 1210 may be configured based on the single base station. The network node 1210 may provide the cell 1211 by using at least one component of the single base station. The mobility management device 150 may include the cell 1211 provided through the network node 1210 in the DTAL 1200 for a UE 120. The mobility management device 150 may set the DTAL 1200 including the cell 1211 provided by the network node 1210.

For example, the cell 1221 may be provided through a network node 1220. The network node 1220 may be configured based on the CU and the DU. The network node 1220 may provide the cell 1221 by using the DU controlled by the CU. For example, The network node 1220 may provide a plurality of cells by using the DU. In FIG. 12, one DU connected to the CU is illustrated, but it is not limited thereto. According to an embodiment, the network node 1220 may be configured with the CU and one or more DUs. The mobility management device 150 may include the cell 1221 provided through the network node 1220 in the DTAL 1200 for the UE 120. The mobility management device 150 may set the DTAL 1200 including the cell 1221 provided by the network node 1220.

For example, the cell 1231 may be provided through a network node 1230. The network node 1230 may be configured based on the CU, the DU, and the RU. The network node 1230 may provide the cell 1231 by using the RU. For example, The network node 1230 may provide a plurality of cells by using the RU. In FIG. 12, one RU connected to the DU is illustrated, and one DU connected to the CU is illustrated, but it is not limited thereto. According to an embodiment, the network node 1230 may be configured with the CU, one or more DUs, and one or more RUs. According to an embodiment, the mobility management device 150 may determine the number of cells of the DTAL 1200 based on the number of RUs identified based on mobility information of the UE and/or paging history information of the UE. The mobility management device 150 may include the cell 1231 provided through the network node 1230 in the DTAL 1200 for the UE 120. The mobility management device 150 may set the DTAL 1200 including the cell 1231 provided by the network node 1230.

For example, the cell 1241 may be provided through a network node 1240. The network node 1240 may be configured based on the DU and the RU. The network node 1240 may provide the cell 1241 by using the RU. For example. The network node 1240 may provide a plurality of cells by using the RU. In FIG. 12, one RU connected to the DU is illustrated, but it is not limited thereto. According to an embodiment, the network node 1240 may be configured with the DU and a plurality of RUs. According to an embodiment, the mobility management device 150 may determine the number of cells of the DTAL 1200 based on the number of RUs identified based on the mobility information of the UE and/or the paging history information of the UE. The mobility management device 150 may include the cell 1241 provided through the network node 1240 in the DTAL 1200 for the UE 120. The mobility management device 150 may set the DTAL 1200 including the cell 1241 provided by the network node 1240.

In FIG. 12, an example of determining the number of cells of a DTAL according to an implementation example of a network node (e.g., the NG-RAN node) for providing an access network is described, but embodiments of the present disclosure are not limited thereto. The mobility management device 150 may determine the number of cells of the DTAL 1200 by identifying a cell servicing a geographic area determined based on a physical moving path or an actual paging history of the UE.

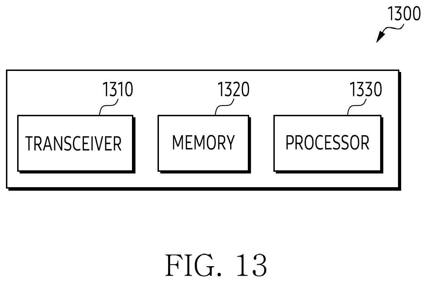

FIG. 13 illustrates a functional configuration of a mobility management device for providing a dynamic tracking area according to embodiments. The mobility management device means the mobility management device 150 (e.g., MME, or AMF) described with reference to FIG. 1A to FIG. 12. The configuration illustrated in FIG. 13 may be understood as a configuration of the mobility management device 150. Hereinafter, terms such as "... unit" and "... module", and the like, refer to a unit for processing at least one function or operation, and may be implemented in hardware, software, or a combination of hardware and software.

Referring to FIG. 13, the mobility management device 150 includes a transceiver 1310, memory 1320, and a processor 1330.

The transceiver 1310 may perform functions for transmitting and receiving signals in a wired communication environment. The transceiver 1310 may include a wired interface for controlling a direct connection between devices through a transmission medium (e.g., a copper line, or an optical fiber). The transceiver 1310 may support an N2 interface. For example, the transceiver 1310 may transmit an electrical signal to a node of a base station (e.g., a gNB, a gNB-CU, a gNB-CU-CP) through a copper line, or perform conversion between an electrical signal and an optical signal. The mobility management device 150 may be connected to one or more base stations through the transceiver 1310. For example, the transceiver 1310 may transmit a paging message to a corresponding base station.

The transceiver 1310 may also perform functions for transmitting and receiving signals in a wireless communication environment. The transceiver 1310 may support an N1 interface. The mobility management device 150 may support NAS signaling through the transceiver 1310. The mobility management device 150 may transmit a NAS message to a UE through the transceiver 1310. For example, the transceiver 1310 may receive a registration request message from the UE. The transceiver 1310 may transmit a registration accept message to the UE.

The transceiver 1310 transmits and receives signals as described above. Accordingly, all or a portion of the transceiver 1310 may be referred to as a "communication unit," a "transmission unit," a "reception unit," or a "transmission/reception unit". In addition, in the following description, transmission and reception performed through a wireless channel are used to include performing the processing as described above by the transceiver 1310. Although only the transceiver 1310 is illustrated in FIG. 13, according to another implementation example, the mobility management device 150 may include two or more transceivers.

Although not illustrated in FIG. 13, the transceiver 1310 may further include a transceiver for being connected to another entity (e.g., an NWDAF) of a core network. The transceiver provides an interface for performing communication with other nodes in a network. That is, a backhaul transceiver converts a bit stream transmitted from a base station to another node, for example, another access node, another base station, an upper node, or a core network, into a physical signal, and converts the physical signal received from the another node into a bit stream.

The memory 1320 stores data such as a basic program, an application program, and configuration information for an operation of an electronic device. The memory 1320 may be referred to as a storage unit. The memory 1320 may be configured with a volatile memory, a non-volatile memory, or a combination of a volatile memory and a non-volatile memory. The memory 1320 provides stored data according to a request of the processor 1330.

The processor 1330 controls overall operations of the electronic device. The processor 1380 may be referred to as a control unit. For example, the processor 1330 transmits and receives signals through the transceiver 1310 (or through a backhaul communication unit). In addition, the processor 1330 writes data to the memory 1320 and reads data from the memory 1320. Further, the processor 1330 may perform functions of a protocol stack required by a communication standard. Although only the processor 1330 is illustrated in FIG. 13, according to another implementation example, the mobility management device 150 may include two or more processors.

The configuration of the electronic device illustrated in FIG. 13 is only an example, and an example of a mobility management device performing embodiments of the present disclosure is not limited to the configuration illustrated in FIG. 13. In some embodiments, some configurations may be added, deleted, or changed.

According to an embodiment, a method performed by a mobility management device may comprise obtaining mobility information of a user equipment (UE) and paging history information of the UE. The method may comprise, based on the mobility information and the paging history information, determining the number of cells of a dynamic tracking area list. The method may comprise, based on the number of cells of the dynamic tracking area list, identifying at least one cell among candidate cells according to the mobility information. The method may comprise, based on the identified at least one cell, generating the dynamic tracking area list. The method may comprise, based on identifying downlink data for the UE, performing a paging procedure in each of cells in the dynamic tracking area list.

For example, the mobility information may comprise at least one of information on access history of the UE during a first time interval or moving path information of the UE during the first time interval.

For example, the method may comprise setting the mobility information as input data for a first prediction model. The method may comprise identifying information on a connection time for each cell of the UE predicted in a second time interval, based on output data of the first prediction model. The method may comprise identifying the candidate cells based on the information on the connection time for each cell of the UE predicted in the second time interval.

For example, the method may comprise, based on the information on the connection time for each cell of the UE predicted in the second time interval, identifying cells exceeding a designated connection time as the candidate cells.

For example, the method may comprise setting the mobility information as input data for a second prediction model. The method may comprise identifying the number of cells to which the UE is predicted to be connected in the second time interval based on output data of the second prediction model. The method may comprise determining the number of cells of the dynamic tracking area list based on the number of cells to which the UE is predicted to be connected in the second time interval.

For example, the method may comprise setting the paging history information as input data for a third prediction model. The method may comprise identifying the number of occurrences of the paging procedure predicted in the second time interval based on output data of the third prediction model. The method may comprise determining the number of cells of the dynamic tracking area list based on the number of occurrences of the paging procedure predicted in the second time interval.

For example, a size of the dynamic tracking area list may be configured based on the number of cells of the dynamic tracking area list.

For example, the method may comprise performing the paging procedure based on transmitting a paging message to base stations related to the cells of the dynamic tracking area list. The paging message may include information on the dynamic tracking area list.

For example, the method may comprise receiving, from the UE, a registration request message. The method may comprise, based on receiving the registration request message, identifying that the UE is out of a range of a plurality of tracking areas of the dynamic tracking area list. The method may comprise, based on identifying that the UE is out of the range, generating another dynamic tracking area list for the UE.

For example, the mobility management device may comprise an access and mobility management function (AMF) or a mobility management entity (MME).

According to an embodiment, a mobility management device may comprise at least one transceiver, at least one processor including processing circuitry, and memory comprising one or more storage media storing instructions. The instructions, when executed individually or collectively by the at least one processor, may cause the mobility management device to obtain mobility information of a user equipment (UE) and paging history information of the UE. The instructions, when executed individually or collectively by the at least one processor, may cause the mobility management device to, based on the mobility information and the paging history information, determine the number of cells of a dynamic tracking area list. The instructions, when executed individually or collectively by the at least one processor, may cause the mobility management device to, based on the number of cells of the dynamic tracking area list, identify at least one cell among candidate cells according to the mobility information. The instructions, when executed individually or collectively by the at least one processor, may cause the mobility management device to, based on the identified at least one cell, generate the dynamic tracking area list. The instructions, when executed individually or collectively by the at least one processor, may cause the mobility management device to, based on identifying downlink data for the UE, perform a paging procedure in each of cells in the dynamic tracking area list.

For example, the mobility information may comprise at least one of information on access history of the UE during a first time interval or moving path information of the UE during the first time interval.

For example, the instructions, when executed individually or collectively by the at least one processor, may cause the mobility management device to set the mobility information as input data for a first prediction model. The instructions, when executed individually or collectively by the at least one processor, may cause the mobility management device to identify information on a connection time for each cell of the UE predicted in a second time interval, based on output data of the first prediction model. The instructions, when executed individually or collectively by the at least one processor, may cause the mobility management device to identify the candidate cells based on the information on the connection time for each cell of the UE predicted in the second time interval.

For example, the instructions, when executed individually or collectively by the at least one processor, may cause the mobility management device to, based on the information on the connection time for each cell of the UE predicted in the second time interval, identify cells exceeding a designated connection time as the candidate cells.

For example, the instructions, when executed individually or collectively by the at least one processor, may cause the mobility management device to set the mobility information as input data for a second prediction model. The instructions, when executed individually or collectively by the at least one processor, may cause the mobility management device to identify the number of cells to which the UE is predicted to be connected in the second time interval based on output data of the second prediction model. The instructions, when executed individually or collectively by the at least one processor, may cause the mobility management device to determine the number of cells of the dynamic tracking area list based on the number of cells to which the UE is predicted to be connected in the second time interval.

For example, the instructions, when executed individually or collectively by the at least one processor, may cause the mobility management device to set the paging history information as input data for a third prediction model. The instructions, when executed individually or collectively by the at least one processor, may cause the mobility management device to identify the number of occurrences of the paging procedure predicted in the second time interval based on output data of the third prediction model. The instructions, when executed individually or collectively by the at least one processor, may cause the mobility management device to determine the number of cells of the dynamic tracking area list based on the number of occurrences of the paging procedure predicted in the second time interval.

For example, a size of the dynamic tracking area list may be configured based on the number of cells of the dynamic tracking area list.

For example, the instructions, when executed individually or collectively by the at least one processor, may cause the mobility management device to perform the paging procedure based on transmitting a paging message to base stations related to the cells of the dynamic tracking area list. The paging message may include information on the dynamic tracking area list.

For example, the instructions, when executed individually or collectively by the at least one processor, may cause the mobility management device to receive, from the UE, a registration request message. The instructions, when executed individually or collectively by the at least one processor, may cause the mobility management device to, based on receiving of the registration request message, identify that the UE is out of a range of a plurality of tracking areas of the dynamic tracking area list. The instructions, when executed individually or collectively by the at least one processor, may cause the mobility management device to, based on identifying that the UE is out of the range, generate another dynamic tracking area list for the UE.

For example, the mobility management device may comprise an access and mobility management function (AMF) or a mobility management entity (MME).

An electronic device and a method according to embodiments of the present disclosure may identify a cell for configuring a dynamic tracking area list by learning a residence time of a UE for each base station during a designated time, the number of base stations in which the UE resides during the designated time, and the number of occurrences of a paging procedure during the designated time. As the dynamic tracking area list is configured based on mobility information of the UE and/or paging history information of the UE, signaling of a registration procedure and a paging procedure may be reduced.

The effects that can be obtained from the present disclosure are not limited to those described above, and any other effects not mentioned herein will be clearly understood by those having ordinary knowledge in the art to which the present disclosure belongs, from the following description.

For one or more embodiments, at least one of components described in one or more of the preceding drawings may be configured to perform one or more operations, techniques, processes, and/or methods as described in the present disclosure. For example, a processor (e.g., a baseband processor) described in the present disclosure in relation to one or more of the preceding drawings may be configured to operate according to one or more examples described in the present disclosure. As another example, circuitry associated with a user equipment (UE), a base station, a network element, and the like as described above in relation to one or more of the preceding drawings may be configured to operate according to one or more examples described herein.

Any one of the embodiments described above may be combined with any other embodiment (or a combination of embodiments) unless explicitly stated otherwise. The foregoing description of one or more implementations provides illustration and explanation, but is not intended to limit the scope of the embodiments to the precise form disclosed or to be exhaustive. Modifications and variations are possible in light of the above teachings or may be obtained from practice of various embodiments.

Methods according to embodiments described in claims or specifications of the present disclosure may be implemented as a form of hardware, software, or a combination of hardware and software.

In a case of implementing as software, a non-transitory computer-readable storage medium for storing one or more programs (software module) may be provided. The one or more programs stored in the computer-readable storage medium are configured for execution by one or more processors in an electronic device. The one or more programs include instructions that cause the electronic device to execute the methods according to embodiments described in claims or specifications of the present disclosure.

Such a program (software module, software) may be stored in a random access memory, a non-volatile memory including a flash memory, a read only memory (ROM), an electrically erasable programmable read only memory (EEPROM), a magnetic disc storage device, an optical storage device (e.g., a compact disc-ROM (CD-ROM), digital versatile discs (DVDs), or other formats), or a magnetic cassette. Alternatively, it may be stored in memory configured with a combination of some or all of them. In addition, a plurality of memories may be included.

Additionally, a program may be stored in an attachable storage device that may be accessed through a communication network such as the Internet, Intranet, local area network (LAN), wide area network (WAN), or storage area network (SAN), or a combination thereof. Such a storage device may be connected to a device performing an embodiment of the present disclosure through an external port. In addition, a separate storage device on the communication network may also be connected to a device performing an embodiment of the present disclosure.

In the above-described specific embodiments of the present disclosure, components included in the disclosure are expressed in the singular or plural according to the presented specific embodiment. However, the singular or plural expression is selected appropriately according to a situation presented for convenience of explanation, and the present disclosure is not limited to the singular or plural component, and even components expressed in the plural may be configured in the singular, or a component expressed in the singular may be configured in the plural.

According to various embodiments, one or more components or operations of the above-described components may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be executed sequentially, in parallel, repeatedly, or heuristically, or one or more of the operations may be executed in a different order or omitted, or one or more other operations may be added.

The present disclosure has been illustrated and described with reference to various exemplary embodiments, but it will be understood that the various exemplary embodiments are intended to be illustrative and not limiting. It will be further understood by those skilled in the art that various changes in form and details may be made without departing from the true spirit and entire scope of the present invention as defined by the appended claims and equivalents thereof.

## Claims

1. A method performed by a mobility management device, the method comprising:
obtaining mobility information of a user equipment (UE) and paging history information of the UE;
based on the mobility information and the paging history information, determining the number of cells of a dynamic tracking area list;
based on the number of cells of the dynamic tracking area list, identifying at least one cell among candidate cells according to the mobility information;
based on the identified at least one cell, generating the dynamic tracking area list; and
based on identifying downlink data for the UE, performing a paging procedure in each of cells in the dynamic tracking area list.

2. The method of claim 1, wherein the mobility information comprises at least one of information on access history of the UE during a first time interval or moving path information of the UE during the first time interval.

3. The method of claim 2, wherein the method further comprises:
setting the mobility information as input data for a first prediction model;
identifying information on a connection time for each cell of the UE predicted in a second time interval, based on output data of the first prediction model; and
identifying the candidate cells based on the information on the connection time for each cell of the UE predicted in the second time interval.

4. The method of claim 3, wherein the method further comprises:
based on the information on the connection time for each cell of the UE predicted in the second time interval, identifying cells exceeding a designated connection time as the candidate cells.

5. The method of claim 3, wherein the method further comprises:
setting the mobility information as input data for a second prediction model;
identifying the number of cells to which the UE is predicted to be connected in the second time interval based on output data of the second prediction model; and
determining the number of cells of the dynamic tracking area list based on the number of cells to which the UE is predicted to be connected in the second time interval.

6. The method of claim 5, wherein the method further comprises:
setting the paging history information as input data for a third prediction model;
identifying the number of occurrences of the paging procedure predicted in the second time interval based on output data of the third prediction model; and
determining the number of cells of the dynamic tracking area list based on the number of occurrences of the paging procedure predicted in the second time interval.

7. The method of claim 1, wherein a size of the dynamic tracking area list is configured based on the number of cells of the dynamic tracking area list.

8. The method of claim 1, wherein the method further comprises performing the paging procedure based on transmitting a paging message to base stations related to the cells of the dynamic tracking area list, and
wherein the paging message includes information on the dynamic tracking area list.

9. The method of claim 1, wherein the method further comprises:
receiving, from the UE, a registration request message;
based on receiving the registration request message, identifying that the UE is out of a range of a plurality of tracking areas of the dynamic tracking area list; and
based on identifying that the UE is out of the range, generating another dynamic tracking area list for the UE.

10. The method of claim 1, wherein the mobility management device comprises an access and mobility management function (AMF) or a mobility management entity (MME).

11. A mobility management device comprising:
at least one transceiver,
at least one processor including processing circuitry; and
memory comprising one or more storage media storing instructions,
wherein the instructions, when executed individually or collectively by the at least one processor, cause the mobility management device to:
obtain mobility information of a user equipment (UE) and paging history information of the UE,
based on the mobility information and the paging history information, determine the number of cells of a dynamic tracking area list,
based on the number of cells of the dynamic tracking area list, identify at least one cell among candidate cells according to the mobility information,
based on the identified at least one cell, generate the dynamic tracking area list, and
based on identifying downlink data for the UE, perform a paging procedure in each of cells in the dynamic tracking area list.

12. The mobility management device of claim 11, wherein the mobility information comprises at least one of information on access history of the UE during a first time interval or moving path information of the UE during the first time interval.

13. The mobility management device of claim 12, wherein the instructions, when executed individually or collectively by the at least one processor, cause the mobility management device to:
set the mobility information as input data for a first prediction model,
identify information on a connection time for each cell of the UE predicted in a second time interval, based on output data of the first prediction model, and
identify the candidate cells based on the information on the connection time for each cell of the UE predicted in the second time interval.

14. The mobility management device of claim 13, wherein the instructions, when executed individually or collectively by the at least one processor, cause the mobility management device to, based on the information on the connection time for each cell of the UE predicted in the second time interval, identify cells exceeding a designated connection time as the candidate cells.

15. The mobility management device of claim 13, wherein the instructions, when executed individually or collectively by the at least one processor, cause the mobility management device to:
set the mobility information as input data for a second prediction model,
identify the number of cells to which the UE is predicted to be connected in the second time interval based on output data of the second prediction model, and
determine the number of cells of the dynamic tracking area list based on the number of cells to which the UE is predicted to be connected in the second time interval.
